# EUROPEAN PATENT APPLICATION

(11) **EP 4 830 951 A1**
(43) Date of publication of application: **28.10.2026**
(21) Application number: 26168538.2
(22) Date of filing: 27.03.2026
(51) Int. Cl.: B60H 1/00, B61D 27/00

(54) **VEHICLE-MOUNTED AIR CONDITIONING UNIT AND CONTROL METHOD OF AIR CONDITIONING UNIT**

(30) Priority: 24.04.2025 CN 202510522774
(71) Applicant: Shandong Longertek Technology Co., Ltd., Jinan, Shandong 271100 (CN)
(72) Inventor: GAO, Fuxue, Jinan, Shandong 271100 (CN); HAO, Chunyin, Jinan, Shandong 271100 (CN); WANG, Ying, Jinan, Shandong 271100 (CN); JIN, Tiantian, Jinan, Shandong 271100 (CN); SUN, Lin, Jinan, Shandong 271100 (CN); SHE, Kai, Jinan, Shandong 271100 (CN); WEI, Canhao, Jinan, Shandong 271100 (CN); LI, Jing' en, Jinan, Shandong 271100 (CN)
(74) Representative: Zacco GmbH

(57) **Abstract**

The present invention provides a vehicle-mounted air conditioning unit. The air conditioning unit includes an outdoor refrigeration system and at least one indoor heat exchange system that are interconnected and implement heat exchange, and a refrigerant and a secondary refrigerant with different natures respectively circularly flow in the outdoor refrigeration system and the indoor heat exchange system. The present invention further provides a control method of an air conditioning unit. According to the vehicle-mounted air conditioning unit and the control method of an air conditioning unit provided by the present invention, the interior temperature is controlled by setting the two systems such as the outdoor refrigeration system and the indoor heat exchange system, so that the refrigerant does not enter indoor space, and cannot generate potential safety hazards generated by leakage of the refrigerant.

## Description

### Cross-Reference to Related Application

The present invention claims priority and the benefit of the Chinese Patent Application filed with the China National Intellectual Property Administration (CNIPA) on April, 24, 2025, with the application number. 202510522774.9, entitled "VEHICLE-MOUNTED AIR CONDITIONING UNIT AND CONTROL METHOD OF AIR CONDITIONING UNIT".

### Technical Field

The present invention belongs to the technical field of railway vehicles, and in particular to a vehicle-mounted air conditioning unit and a control method of an air conditioning unit.

### Background

A railway vehicle air conditioner is an air conditioning system designed for railway traffic means such as trains, subways, light rails, and trams, which can not only provide comfortable passenger environment, but also ensure the stability of air quality and temperature inside a vehicle. Currently, a railway vehicle air conditioning unit is mainly a unit type air conditioning unit, that is, components such as a compressor, a condenser, a condenser fan, an evaporator, and a ventilator are integrated into one housing, and are mainly divided into two parts such as an outer chamber and an indoor chamber. The outdoor chamber communicates with the atmosphere, and the forced convection of the condenser fan is used to exchange heat with the condenser. The indoor chamber communicates with the interior of the vehicle. The forced convection of the ventilator is used to exchange heat with the evaporator, so as to control the interior temperature. Therefore, the evaporator of the air conditioning unit is actually arranged in the vehicle, and when the evaporator leaks, a refrigerant leaks into the vehicle, resulting in a hidden danger to the vehicle safety.

For this purpose, the present invention is proposed.

### Summary

A technical problem to be solved by the present invention is to provide a vehicle-mounted air conditioning unit and a control method of an air conditioning unit in order to overcome disadvantages in the related art. An interior temperature is controlled by setting the two systems such as an outdoor refrigeration system and an indoor heat exchange system, so that the refrigerant does not enter indoor space, and cannot generate potential safety hazards generated by leakage of the refrigerant.

The present invention provides a vehicle-mounted air conditioning unit. An adopted technical solution is as follows.

A vehicle-mounted air conditioning unit is provided. The air conditioning unit includes an outdoor refrigeration system and an indoor heat exchange system that are interconnected and implement heat exchange, wherein at least one indoor heat exchange system is provided, and a refrigerant and a secondary refrigerant with different natures respectively circularly flow in the outdoor refrigeration system and the indoor heat exchange system.

In some embodiments, the outdoor refrigeration system includes a first heat exchanger, and the outdoor refrigeration system and the indoor heat exchange system are connected by using the first heat exchanger and implement heat exchange.

In some embodiments, the air conditioning unit is of a split type, and the air conditioning unit includes the outdoor refrigeration system and one corresponding indoor heat exchange system; or the air conditioning unit is of a unit type, and the air conditioning unit includes the outdoor refrigeration system and a plurality of corresponding indoor heat exchange systems that are arranged in parallel.

In some embodiments, the indoor heat exchange system includes an expansion water tank that is able to balance pressure fluctuation in a pipeline.

In some embodiments, the outdoor refrigeration system includes a detector configured to detect a leakage condition of the refrigerant.

The present invention further provides a control method of an air conditioning unit, and the following technical solution is adopted.

According to the control method of an air conditioning unit, the air conditioning unit includes an outdoor refrigeration system and an indoor heat exchange system that are connected by using a first heat exchanger and implement heat exchange, the outdoor refrigeration system and the indoor heat exchange system respectively circulate a refrigerant and a secondary refrigerant with different natures, and when the air conditioning unit operates, the outdoor refrigeration system and the indoor heat exchange system are controlled to operate simultaneously.

In some embodiments, the air conditioning unit includes a detector configured to detect a leakage condition of the refrigerant, and when the detector detects that the leakage quantity of the refrigerant exceeds a limit value, the outdoor refrigeration system is controlled to stop the circulation of the refrigerant.

In some embodiments, after the outdoor refrigeration system stops the circulation of the refrigerant, an action of a ventilator is controlled, and a ventilation quantity is increased.

In some embodiments, in a heating mode, the secondary refrigerant is provided with a preset temperature Tsw=Ts-K1; and in a refrigeration mode, the secondary refrigerant is provided with a preset temperature Tsw=Ts+K2, where K1 and K2 are constants related to T1 and Ts, T1 is an exterior environment temperature, and Ts is an interior set temperature.

In some embodiments, in the refrigeration mode, K1=A+αT1-βTs; and in the heating mode, K2=B-γT1+δTs, where A, B, α, β, γ, and δ are adjustable constant coefficients; and preferably, A=B=5, α=β=0.5, and γ=δ=0.5.

In some embodiments, based on a contrast among an exterior environment temperature, an interior environment temperature, and an interior set temperature, the air conditioning unit determines an operating mode of the air conditioning unit, and controls the air conditioning unit to operate automatically.

In some embodiments, the determination of the operating mode of the air conditioning unit includes that: when the exterior environment temperature is greater than or equal to a first determination temperature and the indoor environment temperature is greater than or equal to the interior set temperature, a railway vehicle air conditioner operates the refrigeration mode;
when the exterior environment temperature is smaller than or equal to a second determination temperature and the interior environment temperature is smaller than or equal to the interior set temperature, a railway vehicle air conditioner operates the heating mode; and
a ventilation mode is operated in other cases.

After the embodiments are provided, compared with the related art, the vehicle-mounted air conditioning unit and the control method of an air conditioning unit provided by the present invention are provided with the following beneficial effects.
1. By canceling an interior evaporator, the indoor heat exchange system in which the secondary refrigerant circularly flows isolates the refrigerant of the air conditioning unit from the carriage, thereby completely avoiding the possibility that the refrigerant exists in the vehicle, and improving the operational safety of the railway vehicle.
2. By isolating the outdoor refrigeration system, the refrigerant is only in an outdoor unit part, so that leakage of the evaporator and leakage of the refrigerant into the vehicle are prevented, the potential safety hazards in the vehicle may be avoided, and the popularization and application may be improved.
3. By setting the preset temperature of the secondary refrigerant, the preset temperature of the secondary refrigerant comprehensively considers the interior temperature and the exterior environment temperature, so that the circulation of the secondary refrigerant may perform heat exchange, and the operation efficiency of the air conditioner is further improved.
4. The leakage condition of the refrigerant is monitored by the refrigerant detector at any time. When the leakage of the refrigerant is detected, an outdoor fan is started, so that the refrigerant may be rapidly dispersed into the outdoor atmosphere, and the concentration of the refrigerant may be rapidly reduced to a combustible concentration range, so as to avoid a potential safety risk outside the vehicle.

The following further describes specific embodiments of the present invention with reference to the following accompanying drawings.

### Brief Description of the Drawings

Accompanying drawings which form a part of the present invention are used for providing further understanding of the present invention, and the illustrative embodiments and description thereof in the embodiment of the present invention are used for explaining the present invention and are not to be construed as an undue limitation of the present invention. Apparently, the accompanying drawings in the following description merely show some embodiments of the present invention, and a person of ordinary skill in the art may derive other accompanying drawings from these accompanying drawings without creative efforts.

In the accompanying drawings,
FIG. 1 is a structural schematic diagram of a unit type vehicle-mounted air conditioning unit according to the present invention;
FIG. 2 is a structural schematic diagram of a split type vehicle-mounted air conditioning unit according to the present invention; and
FIG. 3 is a control flow schematic diagram of an air conditioning unit according to the present invention.

Reference numerals: 1: compressor; 2: four-way reversing valve; 21: first four-way valve port; 22: second four-way valve port; 23: third four-way valve port; 24: fourth four-way valve port; 3: first heat exchanger; 4: expansion water tank; 5: water supply pump; 6: electronic expansion valve; 7: outdoor fan; 8: second heat exchanger; 9: refrigerant sensor; 10: indoor temperature sensor; 11: indoor heat exchange unit; and 12: indoor fan.

It should be noted that the accompanying drawings and text description are not intended to limit the concept scope of the present invention in any way, but to describe the concept of the present invention for a person skilled in the art by referring to a specific embodiment.

### Detailed Description of the Embodiments

To make the objectives, technical solutions, and advantages of the embodiments of the present invention clearer, the following clearly and completely describes the technical solutions in the embodiments with reference to the accompanying drawings in the embodiments of the present invention. The following embodiments are intended to describe the present invention, but not restrict the scope of the present invention.

In the embodiments of the present invention, it needs to be illustrated that the indicative direction or position relations of the terms such as "upper", "lower", "front", "rear", "left", "right", "vertical", "inner" and "outer" are direction or position relations illustrated based on the accompanying drawings, just for facilitating the description of the present invention and simplifying the description, but not for indicating or hinting that the indicated device or element must be in a specific direction and is constructed and operated in the specific direction, the terms cannot be understood as the restriction of the present invention.

In the embodiments of the present invention, it needs to be illustrated that, except as otherwise noted, the terms such as "install", "link" and "connect" should be generally understood. For example, the components may be fixedly connected, and also may be detachably connected or integrally connected; the components may be mechanically connected, and also may be electrically connected; and the components may be directly connected, and also may be indirectly connected through an intermediate. For those skilled in the art, the specific meanings of the terms in the embodiment of the present invention may be understood according to specific conditions.

Currently, a railway vehicle air conditioning unit usually includes a compressor, a condenser, a condenser fan, an evaporator, and a ventilator, and may be divided into two parts such as an outer chamber and an indoor chamber. The outdoor chamber communicates with the external atmosphere, and the forced convection of the condenser fan is configured to exchange heat with the condenser. The indoor chamber communicates with the interior of the vehicle. The forced convection of the ventilator is configured to exchange heat with the evaporator, so as to control the interior temperature. Therefore, the evaporator of the air conditioning unit is actually arranged in the vehicle, and during the leakage of the evaporator, a refrigerant leaks into the vehicle, resulting in a hidden danger to the interior safety of the vehicle. To solve the problems in the embodiment of the present invention, the following embodiments are provided.

The embodiment of the present invention provides a unit type railway vehicle air conditioner. A vehicle-mounted air conditioning unit includes an outdoor refrigeration system and an indoor heat exchange system that are interconnected and implement heat exchange, wherein at least one indoor heat exchange system is provided, and a refrigerant and a secondary refrigerant with different natures respectively circularly flow in the outdoor refrigeration system and the indoor heat exchange system.

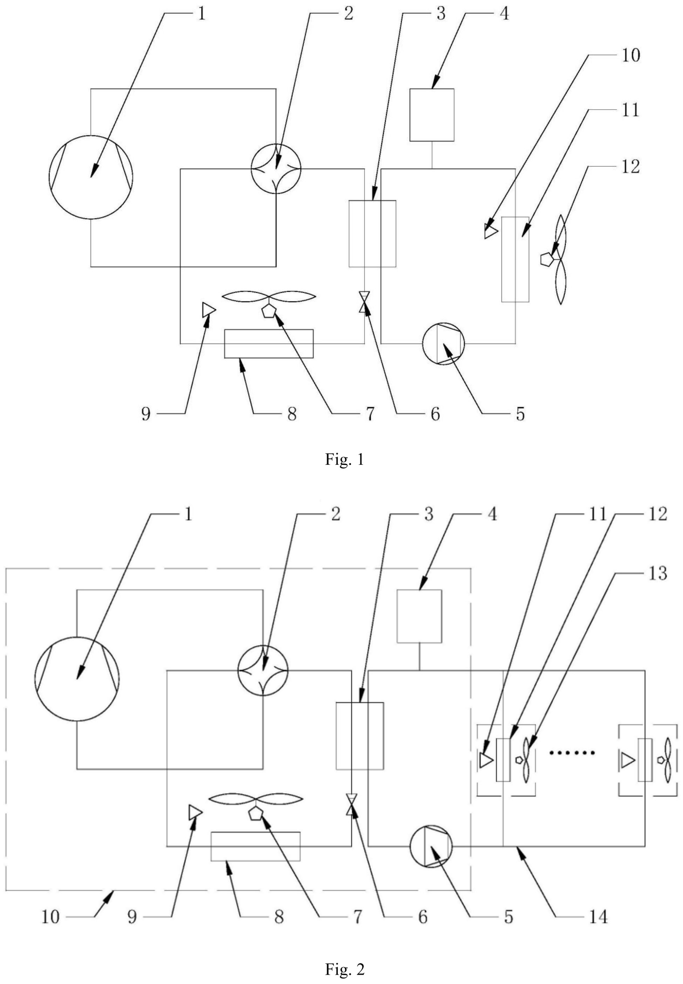

As shown in FIG. 1 and FIG. 2, a vehicle-mounted air conditioning unit provided by the embodiment of the present invention includes an outdoor refrigeration system that is arranged at a position such as a roof or a bottom of a railway vehicle, that is, arranged outside a carriage of the railway vehicle. The outdoor refrigeration system includes a compressor 1 that drives a refrigerant to flow, a four-way reversing valve 2 that adjusts a flow direction of the refrigerant, a first heat exchanger 3, and a second heat exchanger 8. A flow direction of the four-way reversing valve 2 is adjusted to control operating states of the first heat exchanger 3 and the second heat exchanger 8, that is, cold and hot states, so as to implement a refrigeration or heating mode of the air conditioning unit.

The indoor heat exchange system is arranged inside the carriage, and controls an air temperature inside the carriage. The indoor heat exchange system includes a water supply pump 5 that drives circulating surging of the secondary refrigerant, an indoor heat exchange unit configured to exchange heat between the secondary refrigerant and indoor air, and a circulating pipeline. The water supply pump 5 drives the secondary refrigerant to flow in the circulating pipeline. The circulating pipeline is connected to the outdoor refrigeration system. The secondary refrigerant obtains heat at a joint of the circulating pipeline and the outdoor refrigeration system, and heat is brought to the indoor heat exchange unit for heat exchange between the indoor heat exchange unit and indoor air by using circulating flow.

In the embodiment of the present invention, the circulating pipeline extends out of the outdoor refrigeration system outside the carriage, is connected to the first heat exchanger 3 for obtaining heat. In the embodiment of the present invention, the connection may be in any manner such as lamination, abutting, approaching, plugging, or bonding. In the embodiment, the circulating pipeline forms a continuous coil pipe in a U shape or other arbitrary shapes at the first heat exchanger 3, and is laminated to the back of the first heat exchanger 3 for radiation heat exchange, or the first heat exchanger 3 is a fin heat exchanger. Double holes are formed in the fin, a refrigerant pipeline passes through one hole of the double holes, and the circulating pipeline passes through the other hole of the double holes. Heat is obtained from the first heat exchanger 3 in radiation and fin heat transfer manners. Or, the first heat exchanger 3 and the circulating pipeline at the position are both of coil pipe structures that are intersected. The two pipelines are interlaced. The pipelines are laminated or get close to each other for radiation heat exchange. Or, a heat exchange block is arranged at the first heat exchanger 3. A plurality of slots or through slots are formed in the heat exchange block. The circulating pipeline is inserted in the slot or penetrated in the through slot. Heat is obtained by using the heat exchange block. Connection and heat exchange manners between the circulating pipeline and the first heat exchanger 3 are not restricted or limited. Heat obtaining herein refers a heat exchange process. In a refrigeration mode, heat obtaining refers to obtaining cooling capacity from the first heat exchanger 3 by the secondary refrigerant and releasing the cooling capacity indoors during circulation to the indoor heat exchange unit so that the indoor temperature is decreased. In a heating mode, heat obtaining refers to obtaining heat at the first heat exchanger 3 by the secondary refrigerant and providing heat for an intermediate chamber during circulation to the indoor heat exchange unit so that indoor temperature is increased.

In the embodiment of the present invention, the first heat exchanger 3 promotes heat transfer between the outdoor refrigeration system and the indoor heat exchange system, the refrigerant is circulated in the outdoor refrigeration system, and the secondary refrigerant is circulated in the indoor heat exchange system. In the embodiment of the present invention, the natures of the refrigerant and the secondary refrigerant are different. The refrigerant is used for refrigeration circulation outside the carriage, and the secondary refrigerant is used for circulating heat exchange inside the carriage. By setting the indoor heat exchange system in which the secondary refrigerant circularly flows, the refrigerant of the air conditioning unit is isolated from the carriage, thereby completely avoiding the possibility that the refrigerant exists in the vehicle, and improving the operational safety of the railway vehicle.

The outdoor refrigeration system uses a refrigerant with high heat exchange efficiency. In the embodiment of the present invention, the refrigerant may be any one of R290 (propane), R32, R454B, R134a (1,1,1,2-tetrafluoroethane), R407C (a mixed refrigerant composed of three types of Freon such as R32, R125, and R134a), and R410A (a mixed refrigerant composed of two types of Freon such as R32 and R125). The refrigerant is preferably R290 (propane) based on consideration of a low global warming potential. R290 has significant advantages in terms of environmental protection, and has an ozone depletion potential ODP of 0. The global warming potential GWP is 3.3. The outdoor refrigeration system in which the R290 refrigerant flows is arranged outside the carriage to prevent potential safety hazards such as fire caused by the leakage of R290.

The secondary refrigerant used in the indoor heat exchange system may be water, antifreeze or other non-polluted, non-flammable or low-flammable (hereinafter referred to as non-flammable) and non-corrosive liquids. The antifreeze is recommended to be used to prevent the secondary refrigerant from extending to an outdoor section to be frozen in a low temperature environment. The secondary refrigerant is a non-flammable liquid that is not afraid of leakage and is free of corrosion to the pipeline.

An outdoor fan 7 that assists in heat exchange and that may improve heat exchange efficiency is disposed at the second heat exchanger 8.

An electronic expansion valve 6 that is configured to adjust and control a flow capacity of the refrigerant is disposed on a connecting pipeline between the first heat exchanger 3 and the second heat exchanger 8. The electronic expansion valve 6 adjusts the flow capacity of the refrigerant in a refrigerant circulation module by adjusting an opening degree in real time, so as to implement accurate temperature control on the railway vehicle air conditioner.

Four four-way valve ports are provided in the four-way reversing valve 2, where two oppositely arranged four-way valve ports are respectively connected to two ports of the compressor 1, and the other two oppositely arranged four-way valve ports are respectively connected to the first heat exchanger 3 and the second heat exchanger 8. By controlling a connection mode between valve ports of the four-way reversing valve 2, the flow direction of the refrigerant is further controlled, thereby implementing switching between the refrigeration mode and the heating mode of the air conditioner.

It should be noted in detail that the outdoor refrigeration system includes a compressor 1 used for refrigerant compression. An outlet of the compressor 1 is connected to the four-way reversing valve 2. The four-way reversing valve 2 includes a first four-way valve port 21, a second four-way valve port 22, a third four-way valve port 23, and a fourth four-way valve port 24. The compressor 1 is connected to the first four-way valve port 21. The third four-way valve port 23 is connected to an inlet of the compressor 1. The second two-way valve port 22 is connected to the second heat exchanger 8. The other end of the second heat exchanger 8 is connected to the electronic expansion valve 6. The other end of the electronic expansion valve 6 is connected to the first heat exchanger 3. The other end of the first heat exchanger 3 is connected to the fourth four-way valve port 24.

The outdoor refrigeration system further includes a refrigerant sensor 9 configured to detect whether the refrigerant leaks, and the refrigerant sensor 9 is connected to a control module to transmit electrical signal information indicating whether the refrigerant leaks. When the refrigerant sensor 9 detects the information about the leakage of the refrigerant, the control module controls the outdoor fan 7 to operate, and rapidly disperses the leaking refrigerant into the atmosphere timely, so as to rapidly reduce the concentration of the refrigerant below a combustible range, thereby avoiding a potential safety hazard outside the vehicle. In the embodiment, any detector that may detect a leakage condition of the refrigerant may be used, including but not limited to the foregoing refrigerant sensor 9, and may also be any other device that may achieve a similar function.

In the embodiment of the present invention, the outdoor refrigeration system further includes a refrigerant alarm apparatus connected to the refrigerant sensor 9. When the refrigerant sensor 9 detects the information about the leakage of the refrigerant, the refrigerant alarm apparatus sends a warning sound, so as to notify a user that the refrigerant leaks to require maintenance or operation stopping of the air conditioning unit, so as to reduce potential safety hazards.

The indoor heat exchange system includes an indoor heat exchange unit 11 configured to exchange heat between the secondary refrigerant and indoor atmosphere, and an indoor fan 12 configured to accelerate indoor heat exchange. The indoor heat exchange unit 11 mainly transmits heat indoors by using heat exchange of the secondary refrigerant, so as to change the temperature of indoor air. The indoor fan 12 is configured to circulate air, adjust indoor air flow, thereby improving a heat exchange speed of the indoor heat exchange unit 11, and accelerating indoor air circulation. In the embodiment, the indoor heat exchange unit 11 closely cooperates with the indoor fan 12, and the indoor heat exchange unit 11 heats or cools air, and then delivers air after heat exchange to the indoor space driven by the indoor fan 12, thereby implementing the purposes of indoor temperature control and air circulation.

The indoor heat exchange system includes a water supply pump 5. The water supply pump 5 is disposed on the circulating pipeline. The circulating pipeline at a water outlet end extends out of the carriage of the railway vehicle to the first heat exchanger 3, and the circulating pipeline after heat exchange with the first heat exchanger 3 is connected to the indoor heat exchange unit. The other end of the indoor heat exchange unit 11 is connected to a water inlet end of the water supply pump 5. The water supply pump 5, the first heat exchanger 3, and the indoor heat exchange unit 11 are all connected by using the circulating pipeline, and an expansion water tank 4 configured to balance pressure fluctuation caused by heat expansion and cold shrinkage in system water is disposed on the circulating pipeline between the water pump and the first heat exchanger 3.

In the embodiment of the present invention, the indoor heat exchange system further includes an expansion water tank 4 configured to balance pressure fluctuation in a water channel of the system. In particular, in a case that environment temperature changes a lot, the secondary refrigerant causes the pressure fluctuation in the circulating pipeline caused by heat expansion and cold shrinkage. The expansion water tank 4 is disposed on the circulating pipeline between the first heat exchanger 3 and the indoor heat exchanger.

The expansion water tank 4 is able to balance the pressure fluctuation caused by the hot expansion and cold shrinkage of the secondary refrigerant in the system, thereby effectively alleviating the pressure change of the secondary refrigerant (liquid), reducing or avoiding an impact and damage to the circulating pipeline, and protecting the safe and stable operation of the indoor heat exchange system.

The expansion water tank 4 includes a water tank body, an expander, a safety valve, and a connecting pipeline, the water tank body is provided with a specific volume and is configured to store a specific quantity of secondary refrigerant. The expander is a key component of the expansion water tank 4, and is usually located inside the water tank body. The expander is filled with compressed air or nitrogen. When the secondary refrigerant in the expansion water tank 4 is heated to expand, the compressed air or nitrogen is squeezed, so as to buffer and stabilize the pressure. The safety valve is configured to adjust the pressure inside the expansion water tank 4 to prevent explosion of the expansion water tank or other safety problems caused by excessive pressure. The connecting pipeline is configured to connect the expansion water tank 4 to the circulating pipeline, so as to ensure that the secondary refrigerant in the expansion water tank 4 is able to keep smooth circulation with a liquid supply system.

The liquid supply system includes a liquid storage container that may store a specific quantity of secondary refrigerant, and is able to provide a specific quantity of secondary refrigerant to the expansion water tank 4.

In the embodiment of the present invention, an expander may not be arranged. In a normal state, when the secondary refrigerant is not circulated, the secondary refrigerant in the expansion water tank 4 occupies only a part of space of the water tank body, that is, the secondary refrigerant is not full of the entire expansion water tank 4, and specific spare space is left. The capacity of the secondary refrigerant in the expansion water tank 4 and the size of the spare space may be determined based on an expansion coefficient of the user secondary refrigerant. In a case of high temperature, the secondary refrigerant is expanded, and the secondary refrigerant in the circulating pipeline enters the expansion water tank 4. Air in the spare space is compressed. After the pressure reaches a threshold value, the safety valve opens, and the air of the expansion water tank 4 is discharged outward. In a case of low temperature, the secondary refrigerant is shrunk, and the secondary refrigerant in the circulating pipeline 4 enters the circulating pipeline. The pressure in the spare space in the expansion water tank 4 is reduced. After the pressure is decreased to the threshold value, the safety valve opens again, and external air enters the expansion water tank 4.

In the embodiment of the present invention, the refrigerant circulation module further includes an indoor temperature sensor 10, so as to detect the temperature inside the carriage of the railway vehicle in real time. The indoor temperature sensor 10 transmits the detected interior temperature to the control module. The control module determines an operational ventilation mode, a refrigeration mode, or a heating mode based on the detected interior temperature, and determines whether the indoor temperature reaches a preset temperature, so as to control whether to stop operation or operate at low consumption.

In the embodiments of the present invention, the expansion water tank 4 and the water supply pump 5 are disposed in the carriage of the railway vehicle, so as to avoid a damage to a device caused by an excessive temperature change outside the vehicle, and further affect the service lives of the expansion water tank 4 and the water supply pump 5.

As shown in FIG. 1, in the embodiment of the present invention, the air conditioning unit includes an outdoor refrigeration system and an indoor heat exchange system. Each outdoor refrigeration system is corresponding to one indoor heat exchange system. The outdoor refrigeration system and the indoor heat exchange system are respectively arranged outside the carriage and inside the carriage, and are connected to each other outside the carriage by using the first heat exchanger 3 and the circulating pipeline. The indoor heat exchange system includes an indoor heat exchange unit 11.

In the embodiment of the present invention, as shown in FIG. 2, each indoor heat exchange system may include a plurality of indoor heat exchange units 11 arranged in parallel. The plurality of indoor heat exchange units 11 may be distributed in different positions in the carriage, so as to fully adjust a temperature in the carriage, and avoid a case that a local temperature in the carriage is excessively high. Alternatively, the plurality of indoor heat exchange units 11 may be distributed in two or more adjacent carriages, and the temperatures in a plurality of carriages are adjusted at the same time. To avoid a heat loss and a fluid pressure loss that occur in a long-distance flow process of the secondary refrigerant in the circulating pipeline, a secondary pressure pump may be arranged on a circulating pipeline after heat exchange, on a circulating pipeline behind the n-th indoor heat exchange unit 11, so as to improve the circulation pressure of the pipeline. A heat insulation material is coated on the circulating pipeline, and a heating tracer is arranged on the heat insulation material. The temperature of each indoor heat exchange unit 11 is consistent after maintaining the real-time temperature of the secondary refrigerant, so as to ensure that the temperature in each carriage is consistent.

When a plurality of indoor heat exchange units 11 are provided, the plurality of indoor heat exchange units 11 are arranged in parallel. After the circulating pipeline obtains heat from the first heat exchange system 3, the secondary refrigerant after heat exchange is evenly shunted into each indoor heat exchange unit 11of the plurality of indoor heat exchange units 11 under the action of the water supply pump 5, so that the temperature of each indoor heat exchange unit 11 of the plurality of indoor heat exchange units 11 is consistent.

In the embodiment of the present invention, one or more indoor heat exchange systems may be provided, that is, a same outdoor refrigeration system may be corresponding to one or more indoor heat exchange systems. The first heat exchanger 3 may be connected to the circulating pipeline of one or more indoor heat exchange systems for heat exchange at the same, and there is no connection relation between the indoor heat exchange systems.

In the embodiment of the present invention, each outdoor refrigeration system may be corresponding to one or more indoor heat exchange systems, and each indoor heat exchange system may include one or more parallel indoor heat exchange units 11. Those skilled in the art may determine quantity correspondence between the outdoor refrigeration systems and the indoor heat exchange systems and the quantity of the indoor heat exchange units 11 in the indoor heat exchange systems based on an energy efficiency requirement, space inside the carriage, the heat exchange capacity of the secondary refrigerant, and the heat exchange efficiency of the indoor heat exchange unit 11.

The embodiment of the present invention further provides a control method of the foregoing air conditioning unit. Taking that in the air conditioning unit, one outdoor refrigeration system is corresponding to one indoor heat exchange system, and each indoor heat exchange system only includes one indoor heat exchange unit 11 as an example, a specific control method is described.

The four-way reversing valve 2 is provided with two working modes. When the first four-way valve port 21 is connected to the second four-way valve port 22 and the third four-way valve port 23 is connected to the fourth four-way valve port 24, the air conditioning unit operates the refrigeration mode.

When the first four-way valve port 21 is connected to the fourth four-way valve port 24 and the second four-way valve port 22 is connected to the third four-way valve port 23, the air conditioning unit operates the heating mode.

The following is a specific operation control method of the air conditioning unit in the refrigeration mode and the heating mode.

In the refrigeration mode, when the exterior environment temperature is relatively high and the interior of the carriage needs to be cooled, the four-way reversing valve 2 switches to the refrigeration mode, and the compressor 1 is started. The refrigerant enters the four-way reversing valve 2 from the compressor 1, returns to the four-way reversing valve 2 after passing through the second heat exchanger 8, the electronic expansion valve 6, and the first heat exchanger 3, and finally returns to the compressor 1. In the embodiment, the second heat exchanger 8 is equivalent to a condenser, and the first heat exchanger 3 is equivalent to an evaporator. The refrigerant absorbs heat from the evaporator and is condensed into liquid from gas. The circulating pipeline is connected to the first heat exchanger 3, and the refrigerant takes away heat in the secondary refrigerant in the circulating pipeline of the indoor heat exchanger system together by using the first heat exchanger 3, so that the temperature of the secondary refrigerant is decreased.

In the heating mode, when the carriage of the air conditioning unit needs to be heated, the four-way reversing valve 2 switches to the heating mode, and the compressor 1 is started. The refrigerant enters the four-way reversing valve 2 from the compressor 1, returns to the four-way reversing valve 2 after passing through the first heat exchanger 3, the electronic expansion valve 6, and the second heat exchanger 8, and finally returns to the compressor 1. In the embodiment, the second heat exchanger 8 is equivalent to an evaporator, and the first heat exchanger 3 is equivalent to a condenser. The refrigerant is gasified in the first heat exchanger 3 to release heat, and the released heat is transmitted to the secondary refrigerant by means of interconnection.

When the outdoor refrigeration system operates the foregoing refrigeration mode or heating mode, the indoor heat exchange system is in an operating state. The water supply pump 5 is started to drive the secondary refrigerant to finally return into the water supply pump 5 after passing through the indoor heat exchange unit 11 and the first heat exchanger 3 in the circulating pipeline, so as to complete one-through circulation of the secondary refrigerant.

According to the foregoing air conditioning unit, the refrigerant only circularly flows in the outdoor refrigeration system. When the refrigerant passes through the first heat exchanger 3, the refrigerant exchanges heat with the secondary refrigerant, and the cooled or heated secondary refrigerant enters the indoor heat exchange unit 11 for heat exchange by using the circulating pipeline, so as to control the indoor temperature of the railway vehicle.

In the embodiment of the present invention, the refrigerant is used circularly only in the outdoor refrigeration system, and does not enter the interior of the carriage. Heat exchange of the refrigerant is performed by using the first heat exchanger 3 and circulating the secondary refrigerant. Therefore, an operating system of the refrigerant is limited to outdoors. Even if a refrigerant leakage occurs, indoor units of the railway vehicle are not prone to be affected, and the possibility of a risk after the leakage of the refrigerant is reduced. In addition, the refrigerant sensor 9 arranged in the outdoor refrigeration system may detect whether the refrigerant leaks timely. When it is detected that the refrigerant leaks, or when it is detected that the leakage quantity of the refrigerant exceeds the preset threshold value, the refrigerant sensor 9 gives an alert, and the outdoor fan 7 operates, so that the refrigerant may be diffused and discharged outside the vehicle timely, and a potential safety hazard is prevented from being caused when the refrigerant is dispersed to enter the railway vehicle. In the embodiment of the present invention, after it is found that the leakage quantity of the refrigerant exceeds the threshold value, the outdoor refrigeration system is controlled to stop operating, so that the refrigerant stops operating, so as to reduce the leakage quantity of the refrigerant in efficient operation and the refrigerants in different states in the operating process. After the outdoor refrigeration system stops operating, the outdoor fan 7 keeps an original operating mode, the operation quantity is increased, and the air supply quantity is increased, so that the leaking refrigerant is dispersed as soon as possible.

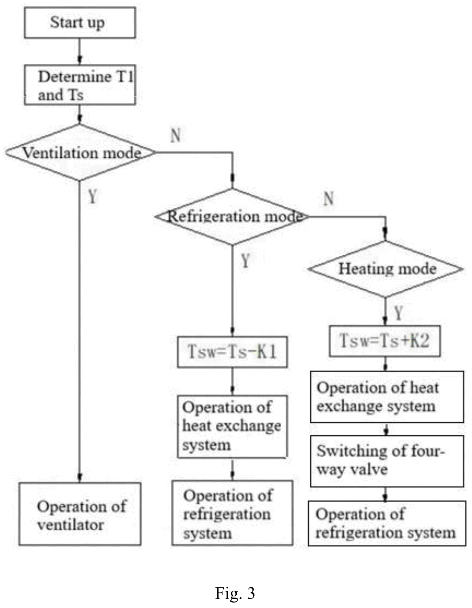

In conclusion, as shown in FIG. 3, the control method of a vehicle-mounted air conditioning unit provided by the embodiment of the present invention includes the following steps.

In step S1, based on a contrast among the exterior environment temperature, the interior environment temperature, and the interior set temperature, it is determined that the air conditioning unit should operate the refrigeration, heating or ventilation mode, and the air conditioning unit is controlled to be started up to operate automatically, or a worker is informed that the air conditioning unit may be started, and the worker manually start the air conditioning unit.

The determination of the refrigeration, heating or ventilation mode based on the contrast among the exterior environment temperature, the interior environment temperature, and the interior set temperature includes that:
when the exterior environment temperature is greater than or equal to a first determination temperature and the indoor real-time environment temperature is greater than or equal to the first set temperature, the air conditioning unit operates the refrigeration mode;
when the exterior environment temperature is smaller than or equal to a second determination temperature and the interior environment temperature is smaller than or equal to a first interior set temperature, the air conditioning unit operates the heating mode; and
the ventilation mode is operated in other cases.

In the embodiment of the present invention, when the first determination temperature may be set to 19°C, the first interior set temperature may be set in a range of 22°C to 26°C, so that when the exterior environment is greater than or equal to 19°C and the interior real-time environment temperature is greater than or equal to a set temperature (the temperature is in a range of 22°C to 26°C), the air conditioning unit operates the refrigeration mode.

When the second determination temperature is set to 16°C, a second interior set temperature is in a range of 12°C to 19°C, so that when the exterior environment is smaller than or equal to 16°C and is smaller than or equal to the second interior set temperature (the temperature is in a range of 12°C to 19°C), the air conditioning unit operates the heating mode.

The interior temperature sensor 10 is arranged in the carriage, and the interior real-time temperature is detected in real time, so as to determine the operating mode of the air conditioning unit, and control the air conditioning unit to be started up to operate automatically or passively based on determination results. It should be noted that switching between the refrigeration mode and the heating mode of the air conditioner is implemented by switching the four-way reversing valve 2. A specific operating mechanism of the four-way reversing valve 2 is described above, and details are not described herein again.

In step S2, after the air conditioning unit operates, the outdoor refrigeration system and the indoor heat exchange system are simultaneously enabled, the operating state and specific operating parameters of the indoor heat exchange system are determined based on the real-time interior environment temperature, the exterior environment temperature, and the set temperatures (different first and second set temperatures in the refrigeration and heating modes) that are obtained in step S1.

After the air conditioning unit is started up to operate, first the set temperature of the secondary refrigerant needs to be determined based on the interior set temperature under different operating modes (the refrigeration mode or the heating mode) based on the determined operating mode, so that the indoor heat exchange system is able to provide enough heat/cold quantity to the carriage, and the indoor temperature reaches the set temperature.

In different operating modes and different set temperatures, the secondary refrigerants in the liquid supply system of the air conditioning unit and/or the circulating pipeline are provided with different set temperatures. In addition, the set temperatures of the secondary refrigerants are determined based on the interior set temperatures (including the first set temperature and the second set temperature) and the exterior environment temperature. The liquid supply system and/or the indoor heat exchange system set different set temperatures of the secondary refrigerants based on different operating modes, so as to effectively adjust the indoor temperature. In the embodiment of the present invention,
in the refrigeration mode, the secondary refrigerant is provided with a preset temperature Tsw=Ts-K1; and
in the heating mode, the secondary refrigerant is provided with a preset temperature Tsw=Ts+K2.

Ts is the interior set temperature, and K1 is a difference (K1=Ts-Tsw) between the interior set temperature and the preset temperature of the secondary refrigerant in the refrigeration mode, and K2 is a difference (K2=Tsw-Ts) between the preset temperature of the secondary refrigerant and the interior set temperature in the heating mode.

In the embodiment of the present invention, the magnitudes of values K1 and K2 in the foregoing formula are related to the interior set temperature TS and the exterior environment temperature T1.

In the embodiment of the present invention, a calculation formula of K1 is: K1=A+αT1-βTs, where T1 is the exterior environment temperature, Ts is the interior set temperature, and constant coefficients A=5 and α=β=0.5 may be set. In the embodiment, values A, α, and β may be selected and adjusted based on a specific operating mode and an operation state. In the embodiment of the present invention,
the value A mainly considers a heat exchange temperature difference between the inside and outside (that is, the temperatures of the secondary refrigerant and the air temperature in the passenger room) of the indoor heat exchanger of the secondary refrigerant of the air conditioning unit during a refrigeration operating design. The larger the heat exchange temperature difference, the larger the value A is set, suggestibly in a range of 5-10.

The values α and β mainly consider the effects of the interior set temperature and the exterior environment temperature on interior heat loads, mainly including two parts such as a fresh air hot load and a vehicle body heat transfer hot load. The greater proportions of the hot loads in the two parts to a total interior hot load, the larger the values α and β are, suggestibly in a range of 0.1-1.

In addition, after the values A, α and β are set, all the operating conditions of the air conditioning unit are re-checked to ensure that the value Tsw ranges from 0°C to 20°C.

A calculation formula of K2 is: K2=B-γT1+δTs. Similarly, in the formula, T1 is the exterior environment temperature, Ts is the interior set temperature, and the constant coefficients B=5 and γ=δ=0.5 may be set. In the embodiment, the values B, γ and δ may be adjusted. The adjustment method is as follows.

The value B mainly considers a heat exchange temperature difference between the inside and outside (that is, the secondary refrigerant and the air temperature in the passenger room) of the indoor heat exchanger of the secondary refrigerant of the air conditioning unit during a heating operating design. The larger the heat exchange temperature difference, the larger the value B is set, suggestibly in a range of 5-15.

The values γ and δ mainly consider the effects of the interior set temperature and the exterior environment temperature on interior heat loads in a hating operating condition, mainly including two parts such as a fresh air cold load and a vehicle body heat transfer cold load. The greater proportions of the cold loads in the two parts to a total interior cold load, the larger the values γ and δ are, suggestibly in a range of 0.1-1.

In addition, after the values B, γ and δ are set, all the operating conditions of the air conditioning unit are re-checked to ensure that the value Tsw ranges from 25°C to 50°C as much as possible.

In the embodiment of the present invention, the preset temperature of the secondary refrigerant is a liquid supply set temperature of the air conditioning unit.

The following table is a calculation case (A and B are set to 5, α, β, γ and δ are initially set to 0.5. The above values may be set based on specific operating environments and characteristics of the air conditioning system.).

| Refrigeration mode | | | | | | |
|---|---|---|---|---|---|---|
| Exterior environment temperature | Set temperature of passenger room | Constant coefficient | | | | Set temperature of secondary refrigerant |
| T1 | TS | A | α | β | K1 | Tsw |
| 19 | 24 | 5 | 0.5 | 0.5 | 2.5 | 21.5 |
| 25 | 24 | 5 | 0.5 | 0.5 | 2.5 | 18.5 |
| 30 | 24 | 5 | 0.5 | 0.5 | 8 | 16 |
| 35 | 24 | 5 | 0.5 | 0.5 | 10.5 | 13.5 |
| 45 | 24 | 5 | 0.5 | 0.5 | 15.5 | 8.5 |
| 50 | 24 | 5 | 0.5 | 0.5 | 18 | 6 |

| Heating mode | | | | | | |
|---|---|---|---|---|---|---|
| Exterior environment temperature | Set temperature of passenger room | Constant coefficient | | | | Set temperature of secondary refrigerant |
| T1 | TS | B | γ | δ | K2 | Tsw |
| 16 | 19 | 5 | 0.5 | 0.5 | 6.5 | 25.5 |
| 10 | 19 | 5 | 0.5 | 0.5 | 9.5 | 28.5 |
| 0 | 19 | 5 | 0.5 | 0.5 | 14.5 | 33.5 |
| -5 | 19 | 5 | 0.5 | 0.5 | 17 | 36 |
| -10 | 19 | 5 | 0.5 | 0.5 | 19.5 | 38.5 |
| -15 | 19 | 5 | 0.5 | 0.5 | 22 | 41 |

Currently, in the air conditioning system in which the secondary refrigerant is used for secondary heat exchange, the set temperature of the secondary refrigerant is set to a fixed value, that is, one value is fixed in the refrigeration mode, and another value is fixed in the heating mode. Therefore, in the refrigeration mode, to meet a refrigeration requirement in a high-temperature refrigeration working condition, the set temperature of the secondary refrigerant in the refrigeration mode needs to be fixed as a relatively low value. In the embodiment, the evaporation temperature of the refrigeration system is also reduced to a relatively low value, thereby reducing the energy efficiency of the refrigeration system. (The energy efficiency of the refrigeration system decreases by 3%-6% while the evaporation temperature decreases by 1°C each time.) In the embodiment of the present invention, on the premise of meeting a refrigeration requirement in the passenger room, the set temperature of the secondary refrigerant is increased as much as possible, which may greatly improve the energy efficiency of the air conditioning system.

In the heating mode, to meet a heating requirement in a low-temperature heating working condition, the set temperature of the secondary refrigerant in the heating mode needs to be fixed as a relatively high value. In the embodiment, the condensation temperature of the refrigeration system is also increased to a relatively high value, thereby reducing the energy efficiency of the refrigeration system. (Empirically, the energy efficiency of the refrigeration system decreases by 2%-6% while the condensation temperature increase by 1°C each time.) In the embodiment of the present invention, on the premise of meeting a heating requirement in the passenger room, the set temperature of the secondary refrigerant is decreased as much as possible, which may greatly improve the energy efficiency of the air conditioning system.

In the embodiment of the present invention, when the air conditioning unit operates the refrigeration mode or the heating mode, the indoor heat exchange system is in an operating state. The water supply pump 5 is started. The secondary refrigerant flows in the circulating pipeline driven by the water supply pump 5, obtains heat at the first heat exchanger 3, and releases the obtained heat at the indoor heat exchange unit 11, so as to adjust the indoor temperature.

The indoor heat exchange system isolates the refrigerant from the interior of the carriage by using the circulating heat exchange of the secondary refrigerant, and the refrigerant only exists in the outdoor refrigeration system outside the carriage, thereby eliminating a possibility that the refrigerant leaks in the carriage.

In step S3, a leakage condition of the refrigerant is detected in real time, and the leaking refrigerant is discharged in time based on the leakage condition of the refrigerant.

The outdoor refrigeration system is arranged in a box, and each component is protected by the box, so as to prevent a high temperature or low temperature of the first heat exchanger and the second heat exchange from burning an operator. A plurality of refrigerant sensors are arranged in different positions in the box. After the outdoor refrigeration system operates, the leakage condition of the refrigerant is detected in real time. In the embodiment of the present invention, each refrigerant sensor is arranged in a refrigeration pipeline and a joint between the refrigeration pipeline and each component, so as to improve detection sensitivity and detection efficiency.

The refrigerant sensor 9 detects the refrigerant in the box in real time to determine whether there is a leakage. When a leakage of the refrigerant is detected, the outdoor fan 7 is controlled to operate and the refrigerant is quickly discharged.

In the embodiment of the present invention, step S3 further includes two cases:
Case 1: the air conditioning unit is in a shutdown state.
   In the shutdown state of the air conditioning unit, a detection period is set. The refrigerant sensor 9 periodically detects the leakage condition of the refrigerant in the downtime state, and gives an alert based on the leakage condition. When the leakage of the refrigerant is detected, the outdoor fan 7 that has been shut down is controlled to operate again, and the refrigerant leaking in the box is discharged to the outside of the box, discharged into the atmospheric environment outside the vehicle.
Case 2: the air conditioning unit is in an operating state.
   When the air conditioning unit is in the ventilation mode, the operation of the outdoor fan 7 is detected in the same manner as in Case 1, so as to discharge the leaking refrigerant timely.

When the air conditioning unit operates the refrigeration or heating mode, the refrigerant sensor 9 detects the leakage condition of the refrigerant in real time. Similarly, a periodic detection method may be used. Considering that when a same leakage point exists, the leakage quantity of the refrigerant in the operating state is greater than that in a still state. Therefore, a detection period in the refrigeration or heating mode is obviously less than a detection period in the shutdown state. In the embodiment, in the shutdown state, detection is performed once every 10 minutes. When the air conditioning unit operates the refrigeration or heating mode, detection may be performed once every 3 minutes. In the embodiment, the detection period may be set without any requirement or limitation.

When the leakage of the refrigerant is detected, the air conditioning unit is controlled to stop operating in order to avoid increasing the leakage quantity. In the embodiment of the present invention, after the leakage of the refrigerant is detected, the outdoor refrigeration system is first controlled to stop operating, and the indoor heat exchange system still continues to operate, so as to make full use of heat at the first heat exchanger 3, so that the secondary refrigerant still continues to operate, and heat is obtained from the first heat exchanger 3 to maintain a stable temperature in the carriage.

In the heating mode, when the temperature at the first heat exchanger 3 is less than or equal to the set temperature in the carriage, and in the refrigeration mode, when the temperature at the first heat exchanger 3 is greater than or equal to the set temperature in the carriage, so that the indoor heat exchange system is controlled to stop operating. In the embodiment of the present invention, a heater is further arranged in the indoor heat exchange system. In the heating mode, when the heat at the first heat exchanger 3 is not suitable for heat exchange with the secondary refrigerant, the heater may be used to heat the secondary refrigerant, so as to maintain the temperature inside the carriage. Alternatively, the heat of the heater may be blown directly into the carriage by using a fan.

In the embodiment of the present invention, a refrigerant leakage threshold value is set in the air conditioning unit. When the content of the refrigerant in the box detected by the refrigerant sensor 9 is greater than or equal to the threshold value, an alert is triggered to control the outdoor fan 7 to operate and discharge the refrigerant.

In the embodiment of the present invention, continuous intervals for the leakage quantity of the refrigerant are arranged. Each interval is respectively corresponding to an operating speed of a different outdoor fan 7, and may be set. In a minimum interval, the outdoor fan 7 may not operate, and diffusion of the refrigerant may be implemented by means of air convection generated when a vehicle operates.

In the embodiment of the present invention, after the leakage condition of the refrigerant is detected, the outdoor refrigeration system is controlled to stop operating, including the outdoor fan 7 stopping operating at the same time. After the outdoor fan 7 completely stops operating, the outdoor fan 7 is controlled to operate again based on a contrast between the currently detected leakage quantity of the refrigerant and interval data, and operates at set power.

Alternatively, after the leakage of the refrigerant is detected, the outdoor refrigeration system is controlled to stop operating, which means that the compressor does not operate any more. The refrigerant stops circularly flowing, and the outdoor fan still keeps operating, which increases the operating power and provides a larger ventilation quantity, so as to accelerate the discharge of the refrigerant. When the current ventilation quantity of the fan is already the maximum operating power of the outdoor fan 7, the current operating power is maintained.

In the embodiment of the present invention, in a case that the leakage quantity of the refrigerant is less than the threshold value but is greater than zero, an alert prompt is also provided, but an operating mode of the outdoor refrigeration system is still maintained, or when the air conditioning unit is provided with multiple operating gears, at least one gear may be reduced, so that the outdoor refrigeration system operates at a low gear, and the leakage quantity may also be reduced while the indoor temperature is maintained. Similarly, the operating power of the outdoor fan 7 is increased, so as to increase the ventilation quantity.

After receiving the alert prompt of refrigerant leakage, the worker formulates different maintenance methods based on an interval where the leakage quantity is. When a plurality of refrigerant sensors 9 are provided, leakage points may be determined based on data values of each refrigerant sensor 9.

In sum, only the better embodiment of the present invention is provided, and no limitation is made on the present invention in any form. Although the better embodiment of the present invention is disclosed above, the better embodiment of the present invention is not used for limiting the present invention and any technician familiar with the specialty without departing from the scope of the technical solutions of the present invention. When the technical content disclosed by the present invention is utilized to make some changes or modifications into equivalent embodiments with equivalent changes, the implementation solutions in the embodiments may also be further combined or replaced, but no matter how far away from the technical solutions content of the present invention, any simple modification, equivalent changes and modifications made on the embodiments according to the technology of the present invention belong to the scope of the technical solutions of the present invention.

After the technical solutions are adopted, compared with the related art, the vehicle-mounted air conditioning unit and the control method of an air conditioning unit provided by the present invention are provided with the following beneficial effects.
1. By canceling the interior evaporator, the indoor heat exchange system in which the secondary refrigerant circularly flows isolates the refrigerant of the air conditioning unit from the carriage, thereby completely avoiding the possibility that the refrigerant exists in the vehicle, and improving the operational safety of the railway vehicle.
2. By isolating the outdoor refrigeration system, the refrigerant is only in an outdoor unit part, so that leakage of the evaporator and leakage of the refrigerant into the vehicle are prevented, the potential safety hazards in the vehicle may be avoided, and the popularization and application may be improved.
3. By setting the preset temperature of the secondary refrigerant, the preset temperature of the secondary refrigerant comprehensively considers the interior temperature and the exterior environment temperature, so that the circulation of the secondary refrigerant may perform heat exchange, and the operation efficiency of the air conditioner is further improved.
4. The leakage condition of the refrigerant is monitored by the refrigerant detector at any time. When the leakage of the refrigerant is detected, an outdoor fan is started, so that the refrigerant may be rapidly dispersed into the outdoor atmosphere, and the concentration of the refrigerant may be rapidly reduced to a combustible concentration range, so as to avoid a potential safety risk outside the vehicle.

In sum, only the better embodiment of the present invention is provided, and no limitation is made on the present invention in any form. Although the better embodiment of the present invention is disclosed above, the better embodiment of the present invention is not used for limiting the present invention and any technician familiar with the specialty without departing from the scope of the technical solutions of the present invention. When the technical content disclosed by the present invention is utilized to make some changes or modifications into equivalent embodiments with equivalent changes, the implementation solutions in the embodiments may also be further combined or replaced, but no matter how far away from the technical solutions content of the present invention, any simple modification, equivalent changes and modifications made on the embodiments according to the technology of the present invention belong to the scope of the technical solutions of the present invention.

## Claims

1. A vehicle-mounted air conditioning unit, wherein the air conditioning unit comprises an outdoor refrigeration system and an indoor heat exchange system that are interconnected and implement heat exchange, wherein at least one indoor heat exchange system is provided, and a refrigerant and a secondary refrigerant with different natures respectively circularly flow in the outdoor refrigeration system and the indoor heat exchange system.

2. The vehicle-mounted air conditioning unit as claimed in claim 1, wherein the outdoor refrigeration system comprises a first heat exchanger (3), and the outdoor refrigeration system and the indoor heat exchange system are connected by using the first heat exchanger (3) and implement heat exchange.

3. The vehicle-mounted air conditioning unit as claimed in claim 1, wherein the air conditioning unit is of a split type, the air conditioning unit comprises the outdoor refrigeration system and one corresponding indoor heat exchange system; or the air conditioning unit is of a unit type, the air conditioning unit comprises the outdoor refrigeration system and a plurality of corresponding indoor heat exchange systems that are arranged in parallel.

4. The vehicle-mounted air conditioning unit as claimed in any one of claims 1 to 3, wherein the indoor heat exchange system comprises an expansion water tank (4) that is able to balance pressure fluctuation in a pipeline.

5. The vehicle-mounted air conditioning unit as claimed in any one of claims 1 to 3, wherein the outdoor refrigeration system comprises a detector configured to detect a leakage condition of the refrigerant.

6. A control method of an air conditioning unit, wherein the air conditioning unit comprises an outdoor refrigeration system and an indoor heat exchange system that are connected by using a first heat exchanger (3) and implement heat exchange, the outdoor refrigeration system and the indoor heat exchange system respectively circulate a refrigerant and a secondary refrigerant with different natures, and when the air conditioning unit operates, the outdoor refrigeration system and the indoor heat exchange system are controlled to operate simultaneously.

7. The control method of an air conditioning unit as claimed in claim 6, wherein the air conditioning unit comprises a detector configured to detect a leakage condition of the refrigerant, and when the detector detects that the leakage quantity of the refrigerant exceeds a limit value, the outdoor refrigeration system is controlled to stop the circulation of the refrigerant.

8. The control method of an air conditioning unit as claimed in claim 7, wherein after the outdoor refrigeration system stops the circulation of the refrigerant, an action of a ventilator is controlled, and a ventilation quantity is increased.

9. The control method of an air conditioning unit as claimed in any one of claims 6 to 8, wherein in a heating mode, the secondary refrigerant is provided with a preset temperature Tsw=Ts-K1; and in a refrigeration mode, the secondary refrigerant is provided with a preset temperature Tsw=Ts+K2, wherein K1 and K2 are constants related to T1 and Ts, T1 is an exterior environment temperature, and Ts is an interior set temperature.

10. The control method of an air conditioning unit as claimed in claim 9, wherein in the refrigeration mode, K1=A+αT1-βTs; and in the heating mode, K2=B-γT1+δTs, wherein A, B, α, β, γ, and δ are adjustable constant coefficients; and preferably, A=B=5, α=β=0.5, and γ=δ=0.5.

11. The control method of an air conditioning unit as claimed in any one of claims 6 to 8, wherein based on a contrast among an exterior environment temperature, an interior environment temperature, and an interior set temperature, an operating mode of the air conditioning unit is determined, and the air conditioning unit is controlled to operate automatically.

12. The control method of an air conditioning unit as claimed in claim 11, wherein the determination of the operating mode of the air conditioning unit comprises that: when the exterior environment temperature is greater than or equal to a first determination temperature and the indoor environment temperature is greater than or equal to the interior set temperature, a railway vehicle air conditioner operates the refrigeration mode;
when the exterior environment temperature is smaller than or equal to a second determination temperature and the interior environment temperature is smaller than or equal to the interior set temperature, a railway vehicle air conditioner operates the heating mode; and
a ventilation mode is operated in other cases.

13. The control method of an air conditioning unit as claimed in claim 1, wherein the outdoor refrigeration system comprises a compressor (1) that drives a refrigerant to flow, a four-way reversing valve (2) that adjusts a flow direction of the refrigerant, a first heat exchanger (3), and a second heat exchanger (8);
an outlet of the compressor (1) is connected to the four-way reversing valve (2), the four-way reversing valve (2) comprises a first four-way valve port (21), a second four-way valve port (22), a third four-way valve port (23), and a fourth four-way valve port (24), the compressor (1) is connected to the first four-way valve port (21), the third four-way valve port (23) is connected to an inlet of the compressor (1), the second two-way valve port (22) is connected to the second heat exchanger (8), the other end of the second heat exchanger (8) is connected to the electronic expansion valve (6), the other end of the electronic expansion valve (6) is connected to the first heat exchanger (3), and the other end of the first heat exchanger (3) is connected to the fourth four-way valve port (24).

14. The control method of an air conditioning unit as claimed in claim 13, wherein the indoor heat exchange system comprises a water supply pump (5) that drives circulating surging of the secondary refrigerant, an indoor heat exchange unit (11) configured to exchange heat between the secondary refrigerant and indoor air, a circulating pipeline, and an expansion water tank (4);
the water supply pump (5) is disposed on the circulating pipeline, the circulating pipeline at a water outlet end extends out of the carriage of the railway vehicle to the first heat exchanger (3), and the circulating pipeline after heat exchange with the first heat exchanger (3) is connected to the indoor heat exchange unit, the other end of the indoor heat exchange unit (11) is connected to a water inlet end of the water supply pump (5); and
the water supply pump (5), the first heat exchanger (3), and the indoor heat exchange unit (11) are all connected by using the circulating pipeline, and the expansion water tank (4) configured to balance pressure fluctuation caused by heat expansion and cold shrinkage in system water is disposed on the circulating pipeline between the water pump and the first heat exchanger (3).

15. The control method of an air conditioning unit as claimed in claim 1, wherein the outdoor refrigeration system further comprises a refrigerant sensor (9) configured to detect whether the refrigerant leaks, and the refrigerant sensor (9) is connected to a control module to transmit electrical signal information indicating whether the refrigerant leaks.
